# EUROPEAN PATENT SPECIFICATION

(11) **EP 1 164 743 B1**
(45) Date of publication and mention of the grant of the patent: **17.11.2004**
(21) Application number: 00901981.1
(22) Date of filing: 28.01.2000
(51) Int. Cl.: H04L 9/08, H04L 12/46, H04L 12/28, H04L 29/06

(54) **COMMUNICATION MANAGING TABLE TRANSFER SYSTEM AND MANAGING DEVICE, CIPHERING DEVICE, AND COMMUNICATION MANAGING TABLE TRANSFER METHOD**
KOMMUNIKATIONSVERWALTENDES TABELLENVERMITTLUNGSSYSTEM, SOWIE VERWALTUNGSEINRICHTUNG, VERSCHLÜSSLUNGSEINRICHTUNG, UND KOMMUNIKATIONSVERWALTENDES TABELLENVERMITTLUNGSVERFAHREN
SYSTEME DE TRANSFERT DE TABLEAU DE GESTION DE COMMUNICATIONS ET DISPOSITIF DE GESTION, DISPOSITIF DE CHIFFRAGE, ET PROCEDE DE TRANSFERT DE TABLEAU DE GESTION DE COMMUNICATIONS

(43) Date of publication of application: 19.12.2001
(73) Proprietor: MITSUBISHI DENKI KABUSHIKI KAISHA, Tokyo 100-8310 (JP)
(72) Inventor: TAKEDA, Noriko, Mitsubishi Elec. Systemware Corp., Tokyo 100-0006 (JP); SASAMOTO, Akihiko, Mitsubishi Denki K. K., Tokyo 100-8310 (JP); ADACHI, Kazuyuki, Mitsubishi Denki K. K., Tokyo 100-8310 (JP); SHINODA, Seiichi,Mitsubishi Denki K. K., Tokyo 100-8310 (JP)
(74) Representative: Pfenning, Meinig & Partner GbR
(86) International application number: PCT/JP2000/000474
(87) International publication number: WO 2001/056223

(56) References cited:
- EP-A- 0 784 392
- JP-A- 11 308 264
- KAUFMAN: "DOMAIN NAME SYSTEM SECURITY EXTENSIONS" , NETWORK WORKING GROUP REQUEST FOR COMMENTS, XX, XX XP002945058 * page 1 - page 37 *
- PAUL ALBITS AND CRIKET LIU: 'DNS & BIND the 3rd ed.', ORAIRII, JAPAN XP002945036 Supervisors of translation: Hiroaki TAKADA, Ikuo KOJIMA; Translator: Mitsumasa KODATE, the 2nd ed., pages VII-IX, 100-102
- D. EASTLAKE, 3RD AND C. KAUFMAN: 'Domain name system security extensions' RFC ( REQUEST FOR COMMENTS) 2065 January 1997, XP002945058
- P. MOCKAPETRIS: 'Domain names - implementation and specification' RFC ( REQUEST FOR COMMENTS) 1035 November 1987, XP002176086

## Description

### Technical Field

The present invention relates to a communication management table transfer system including plural encryptors mutually connected through the Internet and a manager managing communication management table used by the plural encryptors for communication, and further relates to improvement of the security and the performance of the communication.

### Background Art

Recently, system employing Virtual Private Network (VPN) has become popular. The VPN is a network in which a public network such as the Internet is virtually utilized as a private network using security technique such as encryption of data or authentication of a user. The virtual private network system enables to connect plural organizations through the public network as if they use exclusive communication lines like their internal network.

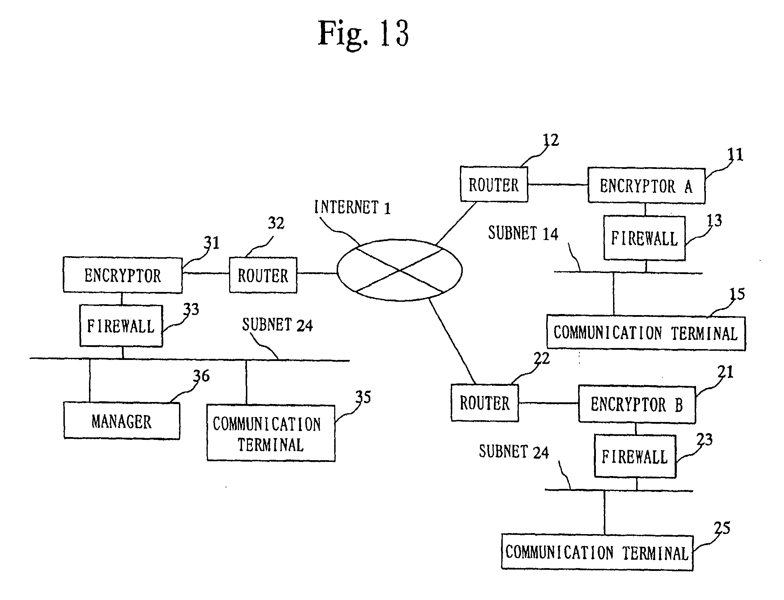

Fig. 13 shows an example of the virtual private network system. A reference numeral 1 shows the Internet, 11, 21, and 31 are encryptors, 12, 22, and 32 are routers, 13, 23, and 33 are firewalls, 14, 24, and 34 are subnets (internal networks), 15, 25, and 35 show communication terminals, and 36 shows a manager. These elements are connected as shown in the figure.

On transferring data via the Internet, IP security compliant system is used for preventing an attack from the outside. Here, IP securuty means security securing system at IP packet level, defined by the IETF (Internet Engineering Task Force) which is a standardization organization for the Internet communication rules.

In the IP securuty system, data transfer is performed after relation so-called SA (Security Association) is established between the encryptors of each internal network. By doing this, secret communication becomes possible. However, to establish SA requires to share a public key among the encryptors as a premise.

Further, in order to transfer data to the communication terminal of the internal network, it is necessary to know information of configuration of each internal network.

Accordingly, a communication management table including the public key and the configuration information of the internal network is generated, and the communication management tables are exchanged between the encryptors before establishing SA. The manager 36 is provided for generating, updating, and distributing the communication management table.

Conventionally, upon request from the encryptor, the manager 36 distributes the communication management table to the encryptor unconditionally.

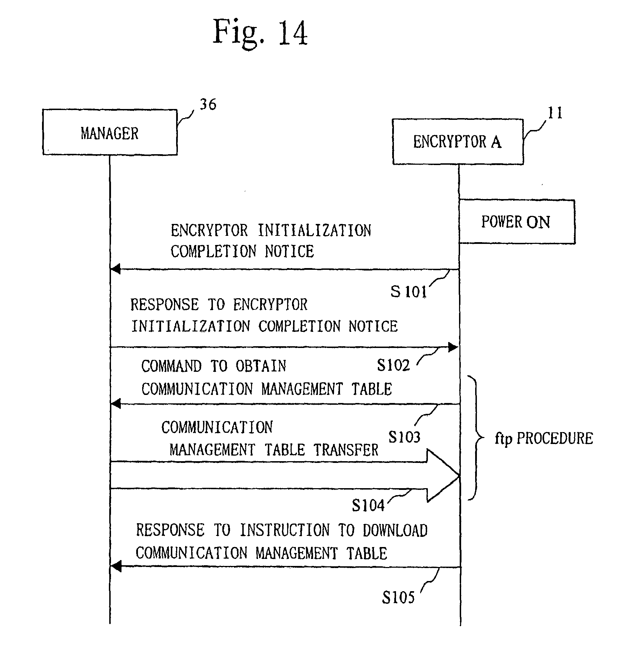

Fig. 14 shows a transfer process of the communication management table on turning electric power on according to the related art. When an encryptor A11 is powered on, the encryptor A11 sends an encryptor initialization notice (S101). When the manager 36 receives the encryptor initialization notice (S101), the manager 36 sends a response to the encryptor initialization notice (S102). On receiving the response to the encryptor initialization notice (S102), the encryptor A11 issues a command to obtain the communication management table (S103) unconditionally, and the communication management table is thus transferred (S104)

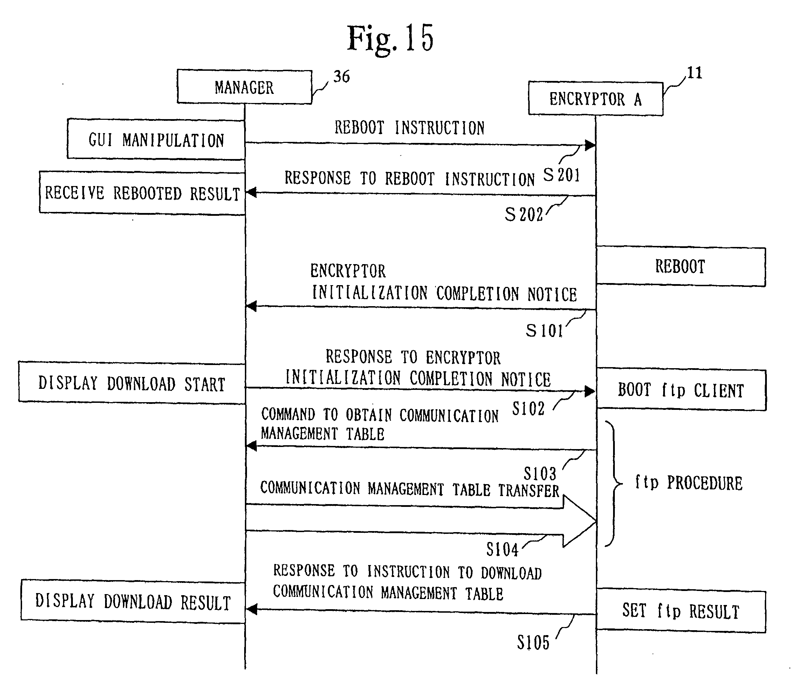

. Fig. 15 shows a transfer process of the communication management table on rebooting according to the related art. The manager 36 sends a reboot instruction (S201), and the encryptor A11 is rebooted after the encryptor A11 sends a response to the reboot instruction (S202). Hereinafter, the operation will be the same as one shown in Fig. 14.

In the above-described system, the number of transferring the communication management table is large, which decreases the performace of data transfer.

Further, there is another problem with respect to the security of the communication, that is, the number of chances may be increased that the communication management table is stolen by an improper user. Namely, the public key or the configuration information of the internal network may be stolen, and the secrecy of the data transfer between the encryptors cannot be secured.

Document EP 0 784 392 relates to key distribution for communication network.

The present invention is provided to eliminate the above conventional problems. The invention aims to reduce the number of transferring the communication management table, improve the performance of data transfer, reduce the chances of improper use of the communication management table, and thus the security of the communication can be increased.

### Disclosure of the Invention

According to the present invention, a communication management table transfer system includes:
plural encryptors connected to each other through Internet; and
a manager which manages the communication management table used for communication among the plural encryptors,
wherein each of the plural encryptors includes:
a communication management table memory of an encryptor side for storing a communication management table of the encryptor side which is the communication management table to be stored in the each of the plural encryptors;
a communication management table version memory of the encryptor side for storing a communication management table version of the encryptor side which is a version of the communication management table of the encryptor side; and
a communication management table version sender for sending the communication management table version of the encryptor side to the manager,
wherein the manager includes:
a communication management table memory of a manger side for storing a communication management table of the manager side which is the communication management table to be stored in the manager;
a communication management table version memory of the manager side for storing a communication management table version of the manager side which is a version of the communication management table of the manager side;
a communication management table version receiver for receiving the communication management table version of the encryptor side from the encryptor;
a communication management table version checker for checking and finding mismatch of the communication management table version of the encryptor side received and the communication management table version of the manager side; and
a communication management table sender for sending the communication management table of the manager side when the mismatch is found by the communication management table version checker,
wherein the encryptor further includes a communication management table receiver for receiving the communication management table of the manager side from the manager, and
wherein the communication management table memory of the encryptor side stores the communication management table of the manager side received by the communication management table receiver as the communication management table of the encryptor side.

The communication management table transfer system of the invention,
wherein the communication management table sender further sends the communication management table version of the manager side when the mismatch is found by the communication management table version checker,
wherein the communication management table receiver further receives the communication management table version of the manager side from the manager, and
wherein the communication management table version memory of the encryptor side stores the communication management table version of the manager side received by the communication management table receiver as the communication management table version of the encryptor side.

According to the present invention, a manager managing a communication management table used for communication among plural encryptors connected to each other through Internet includes:
a communication management table memory of a manger side for storing a communication management table of the manager side which is the communication management table to be stored in the manager;
a communication management table version memory of the manager side for storing a communication management table version of the manager side which is a version of the communication management table of the manager;
a communication management table version receiver for receiving a communication management table version of an encryptor side which is a version of the communication management table of the encryptor side to be store in the encryptor from each of the plural encryptors;
a communication management table version checker for checking and finding mismatch of the communication management table version of the encryptor side received and the communication management table version of the manager side; and
a communication management table sender for sending the communication management table of the manager side when the mismatch is found by the communication management table version checker.

The manager of the invention, wherein the communication management table sender further sends the communication management table version of the manager side when the mismatch is found by the communication management table version checker.

The manager of the invention further includes a communication management table updater of the manager side for updating the communication management table of the manager side and the communication management table version of the manager side correspondingly.

The manager of the invention further includes a communication management table update information receiver for receiving communication management table update information which is information to be updated within the communication management table of the manager side.

According to the present invention, an encryptor connected to another encryptor through Internet and of which a communication management table used for communication is managed by a manager, the encryptor includes:
a communication management table memory of an encryptor side for storing a communication management table of the encryptor side which is the communication management table to be stored in the encryptor;
a communication management table version memory of the encryptor side for storing a communication management table version of the encryptor side which is a version of the communication management table of the encryptor side;
a communication management table version sender for sending the communication management table version of the encryptor side to the manager; and
a communication management table receiver for receiving a communication management table of a manager side which is the communication management table to be stored in the manager from the manager, and
wherein the communication management table memory of the encryptor side stores the communication management table of the manager side received by the communication management table receiver as the communication management table of the encryptor side.

The encryptor of the invnetion, wherein:
the communication management table receiver further receives a communication management table version of the manager side which is a version of the communication management table of the manager side from the manager; and
the communication management table version memory of the encryptor side stores the communication management table version of the manager side received by the communication management table receiver as the communication management table version of the encryptor side.

The encryptor of the invention, wherein the communication management table includes a public key, and
the encryptor further comprising:
a secret key for secret key communication exchanger for sharing a secret key for secret communication used for secret communication with the other encryptor through the Internet, with the other encryptor by using the public key included in the communication management table of the encryptor side.

The encryptor of the invention, wherein the communication management table includes a public key, and
the encryptor further includes:
an certification key for secret key communication exchanger for sharing an certification key for secret communication used for secret communication with the other encryptor through the Internet, with the other encryptor by using the public key included in the communication management table of the encryptor side.

The encryptor of the invention, wherein:
the other encryptor is connected to a subnet; and
the communication management table includes subnet configuration information which is information related to a configuration of the subnet, and
the encryptor further includes:
an Internet communicating unit for communicating with the other encryptor through the Internet based on the subnet configuration information included in the communication management table of the encryptor side.

According to the present invention, a method for transferring a communication management table used for a communication management table transfer system including:
plural encryptors connected to each other through Internet, each of which has a communication management table memory of an encryptor side for storing a communication management table of the encryptor side and a communication management table version memory for storing a communication management table version of the encryptor side; and
a manager managing the communication management table used for communication among the plural encryptors, which has a communication management table memory of a manager side for storing a communication management table of the manager side and a communication management table version memory for storing a communication management table version of the manager side,
the method includes:
sending the communication management table version of the encryptor side to the manager by the encryptor;
receiving the communication management table version of the encryptor side from the encryptor by the manager;
checking and finding mismatch of the communication management table version of the encryptor side received and the communication management table version of the manager side by the manager;
sending the communication management table of the manager side by the manager when the mismatch is found by the checking and finding;
receiving the communication management table of the manager side from the manager by the encryptor; and
storing the communication management table of the manager side received as the communication management table of the encryptor side by the encryptor.

### Brief Explanation of the Drawings

Fig. 1 shows a configuration of an encryptor according to the present embodiment.
Fig. 2 shows a configuration of a manager according to the embodiment.
Fig. 3 shows a transfer procedure of the communication management table on turning electric power on according to the embodiment.
Fig. 4 shows a procedure for omitting the transfer of the communication management table on turning electric power on according to the embodiment.
Fig. 5 shows a transfer procedure of the communication management table on rebooting according to the embodiment.
Fig. 6 shows a procedure for omitting the transfer of the communication management table on rebooting according to the embodiment.
Fig. 7 shows a configuration of the communication management table according to the embodiment.
Fig. 8 shows a configuration of the communication management table according to the embodiment.
Fig. 9 shows a configuration of the communication management table according to the embodiment.
Fig. 10 shows data flow on establishing SA.
Fig. 11 shows data flow on secret communication.
Fig. 12 shows a case in which subnet configuration information is used.
Fig. 13 shows a system in which virtual private network is employed.
Fig. 14 shows a transfer procedure of the communication management table on turning electric power on according to the related art.
Fig. 15 shows a transfer procedure of the communication management table on rebooting according to the related art.

### Best Mode for Carrying out the Invention

### Embodiment 1.

In the following, the present invention will be explained referring to the figures showing an embodiment.

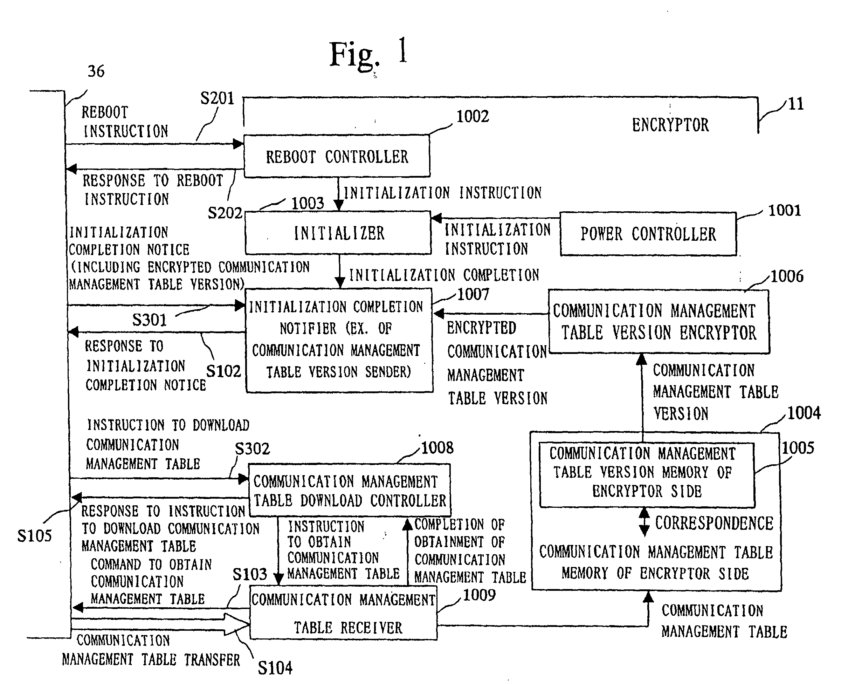

Fig. 1 shows a configuration of an encryptor according the embodiment. A reference numeral 1001 shows a power controller, 1002 shows a reboot controller, 1003 shows an initializer, 1004 shows a communication management table memory of the encryptor side, 1005 shows a communication management table version memory of the encryptor side, 1006 shows a communication management table version encryptor, 1007 shows an initialization completion notifier, 1008 shows a communication management table download controller, and 1009 shows a communication management table receiver.

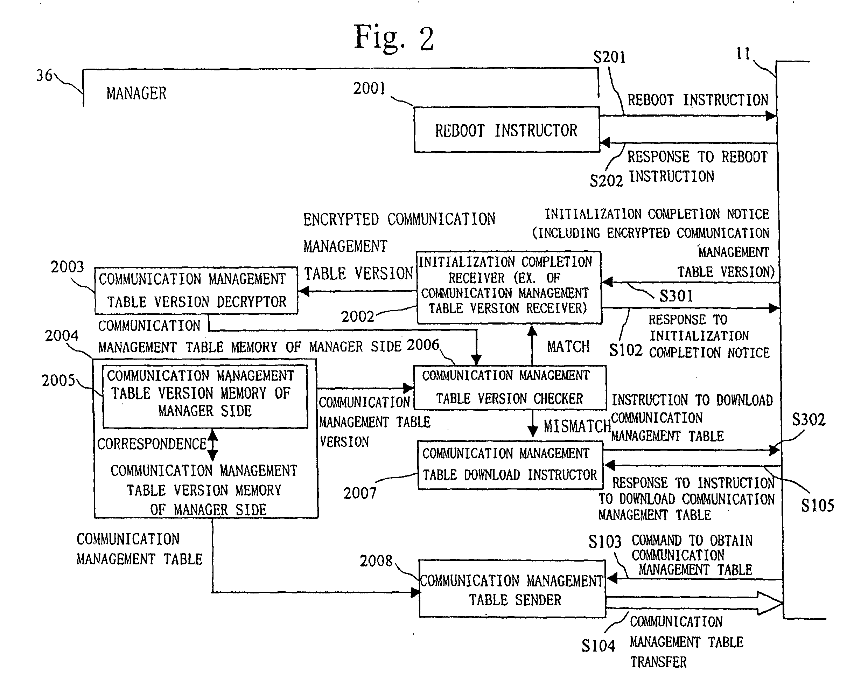

Fig. 2 shows a configuration of a manager according to the embodiment. A reference numeral 2001 shows a reboot instructor, 2002 shows an initialization completion receiver, 2003 shows a communication management table version decryptor, 2004 shows a communication management table memory of the manager side, 2005 shows a communication management table version memory of the manager side, 2006 shows a communication management table version checker, 2007 shows a communication management table download instructor, and 2008 shows a communication management table sender.

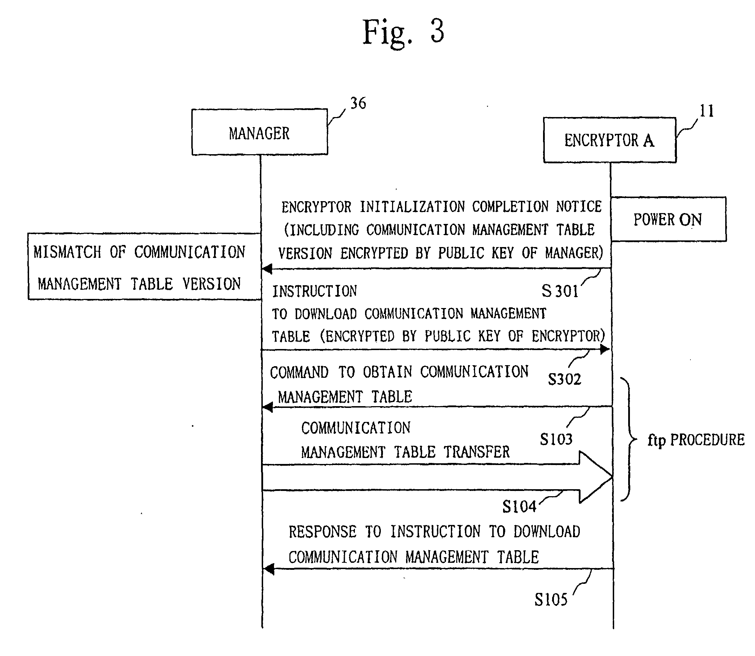

Fig. 3 shows a procedure of transferring the communication management table on turning an electric power on according to the embodiment. Hereinafter, this procedure will be described referring to the configurations shown in Figs. 1 and 2.

At an encryptor A11 side, on turning electric power on, the power controller 1001 instructs initialization to the initializer 1003. When the initialization is completed, the initializer 1003 notifies the initialization completion notifier 1007 of completion of initialization. The initialization completion notifier 1007 sends an encryptor initialization completion notice (S301) to the initialization completion receiver 2002 of a manager 36. At this time, the encryptor initialization completion notice (S301) includes communication management table version encrypted by a public key of the manager 36.

The communication management table version is stored in the communication management table version memory 1005 of the encryptor side. The communication management table version stored in the communication management table version memory 1005 of the encryptor side is made correspondence to the communication management table of the communication management table memory 1004 of the encryptor side. In this example, the communication management table version memory 1005 of the encryptor side is included in the communication management table memory 1004 of the encryptor side, however, the communication management table version memory 1005 can be separated from the communication management table memory 1004 of the encryptor side.

The communication management table version encryptor 1006 is - configured to read the communication management table version from the communication management table version memory 1005 of the encryptor side, encrypt the communication management table version, and send the encrypted communication management table version to the initialization completion notifier 1007.

At the manager 36 side, the initialization completion receiver 2002 receives the encryptor initialization completion notice (S301), and the communication management table version decryptor 2003 decrypts the encrypted communication management table version. On the other hand, the communication management table checker 2006 reads the communication management table version stored at the manager 36 side from the communication management table version memory 2005 of the manager side. And then, the communication management table version checker 2006 compares these communication management table versions. Here, the communication management table version memory 2005 of the manager side is included in the communication management table memory 2004 of the manager side, however, they can be separated as long as the communication management table is made correspondence to the communication management table version.

As a result of comparison, when two communication management table versions mismatch, the communication management table version checker 2006 notifies the mismatch to the communication management table download instructor 2007.

On receiving the notice of the mismatch, the communication management table download instructor 2007 sends a communication management table download instruction (S302) to the communication management table download controller 1008 of the encryptor A11.

At the encryptor A11 side, on receiving the communication management table download instruction (S302), the communication management table download controller 1008 instructs the communication management table receiver 1009 to obtain the communication management table to receive the communication management table according to the procedure of file transfer.

On receiving the instruction to obtain the communication management table, the communication management table receiver 1009 sends a command to obtain the communication management table (S103) to the communication management table sender 2008 of the manager 36.

At the manager 36 side, on receiving the command to obtain the communication management table (S103), the communication management table sender 2008 reads the communication management table from the communication management table memory 2004 of the manager side, and transfers the file of the communication management table to the communication management table receiver 1009 of the encryptor A11 (S104).

At the encryptor A11 side, on finishing receiving the communication management table, the communication management table receiver 1009 notifies the communication management table download controller 1008 of the completion of obtaining the communication management table. The communication management table download controller 1008 sends response to the communication management table download instruction (S105) to the communication management table download instructor 2007 of the manager 36. Further, the communication management table receiver 1009 stores the received communication management table in the communication management table memory 1004 of the encryptor side.

In the above example, the file of the communication management table including the communication management table version is transferred and stored in the communication management table memory 1004 of the encryptor side. However, the communication management table version can be separated from the communication management table. Namely, the file of the communication management table without the communication management table version and the file of the communication management table version can be transferred separately.

In this way, when the communication management table versions mismatch, the communication management table is transferred from the manager 36 to the encryptor A11. Further, the communication management table version is also transferred.

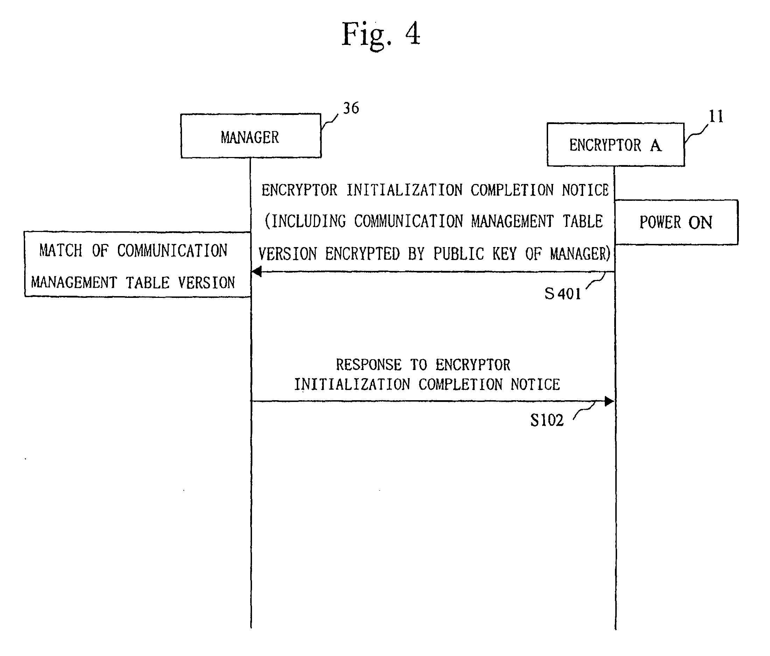

Fig. 4 shows a procedure of omitting the transfer of communication management table on turning an electric power on. Hereinafter, this procedure will be explained referring to the configuration shown in Figs. 1 and 2.

The procedure up to the step where the communication management table version checker 2006 compares the communication management table versions is the same as described above.

As a result of comparison, when the communication management table versions match, the communication management table version checker 2006 notifies the match to the initialization completion receiver 2002.

The initialization completion receiver 2002 sends response to the encryptor initialization completion notice (S102) to the initialization completion notifier 1007. When the initialization completion notifier 1007 receives the encryptor initialization completion notice (S102), the procedure terminates. Namely, the communication management table is not transferred in case that the communication management table versions match.

The timing at which the encryptor A11 sends the communication management table version and the manager 36 checks the communication management table version is not limited to the timing of initialization. It can be another timing, for example, the timing of reboot, or a certain periodical timing.

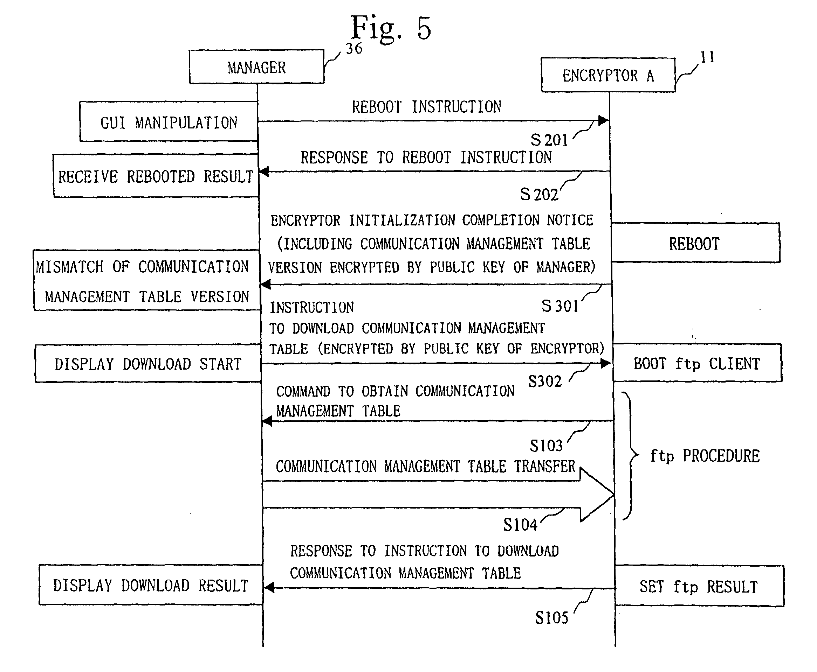

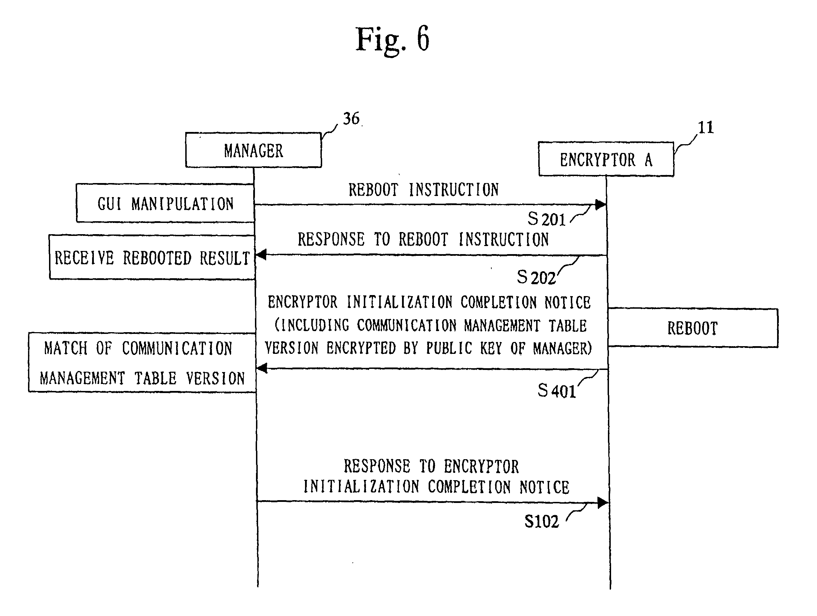

Fig. 5 shows a procedure of transferring the communication management table on rebooting according to the embodiment. Further, Fig. 6 shows a procedure of omitting the transfer of the communication management table on rebooting according to the embodiment. The procedures are the same as ones shown in Figs. 3 and 4 except that the procedures start at rebooting based on a reboot instruction (S201) and a reboot instruction response (S202).

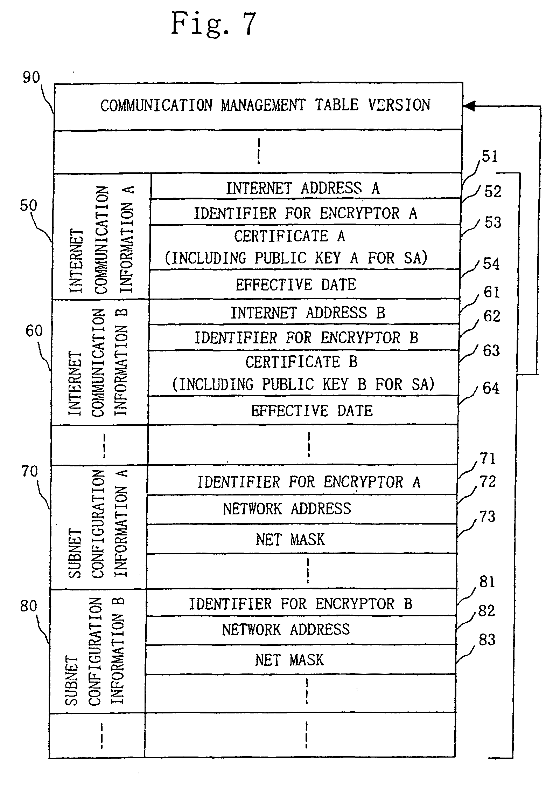

In the following, the configuration of the communication management table will be explained. Figs. 7, 8, and 9 show the configuration of the communication management table according to the present embodiment.

As well as a communication management table version 90, the communication management table includes Internet communication information such as Internet communication information A50, Internet communication information B60, and so on and subnet configuration information such as subnet configuration information A70, subnet configuration information B80, and so on.

The Internet communication information A50 is necessary for the encryptor A11 on communicating with another encryptor through the Internet 1. The Internet communication information B60 is also necessary for the encryptor B21 on communicating with another encryptor through the Internet 1.

Reference numerals 51, 61 show Internet addresses, 52, 62 show identifiers for the encryptors, 53, 63 show certificates, and 54, 64 show effective dates. The certificate includes the public key for SA.

The subnet configuration information A70 is information related to the configuration of a subnet 14. The figure shows information for one record, however, another record may be added when many communication terminals are included in the configuration of the subnet 14. This is the same as for the subnet configuration information B80.

Reference numerals 71, 81 show identifiers of the encryptors, 72, 82 show network addresses, and 73, 83 show net masks.

In case of an example shown in Fig. 7, the communication management table version 90 includes one version, corresponding to the updated status of the whole communication management table.

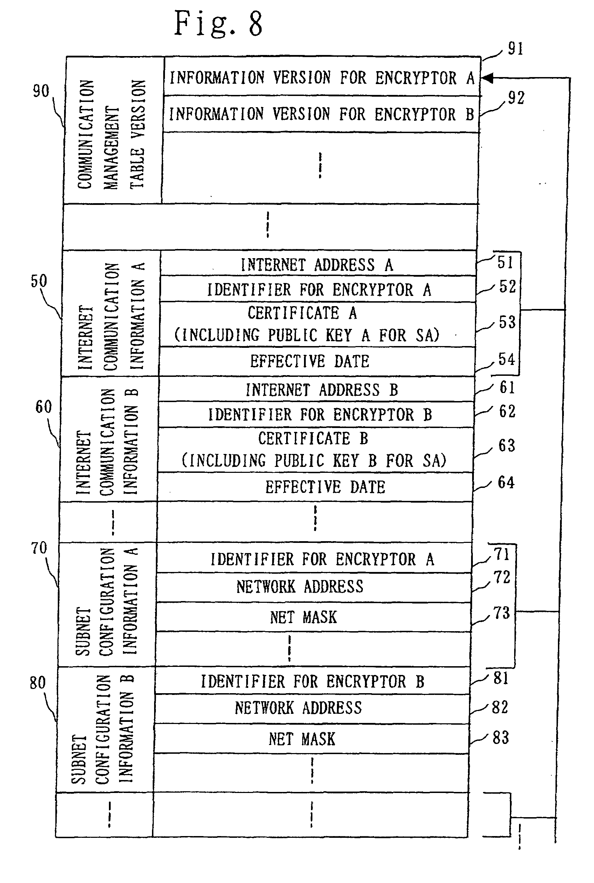

In case of an example shown in Fig. 8, the communication management table version 90 includes plural versions such as encryptor A information version 91, encryptor B information version 92, and so on. The encryptor A information version 91 corresponds to the updated status of the Internet communication information A50 and the subnet configuration information A70, and so on (including another subnet configuration information, if there exists any).

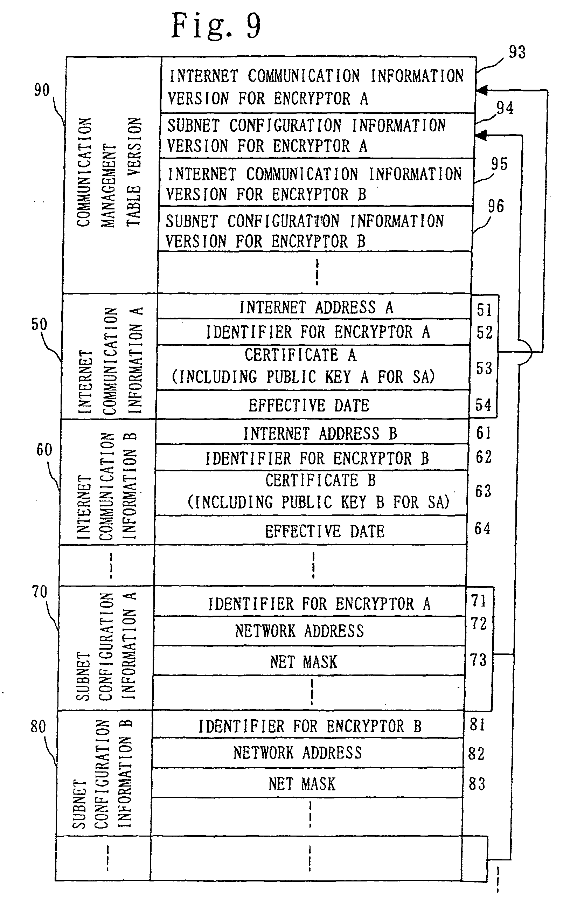

In case of an example shown in Fig. 9, the communication management table version 90 is subdivided and includes versions of encryptor A Internet communication information version 93, encryptor A subnet configuration information version 94, encryptor B Internet communication information version 95, encryptor B subnet configuration information version 96, and so on. The encryptor A Internet communication information version 93 corresponds to the updated status of the Internet communication information A50. The encryptor A subnet configuration information version 94 corresponds to the updated status of the subnet configuration information A70, and so on (including another subnet configuration information, if there exists any).

In cases of Figs. 8 and 9, it is possible to correspond the version to each information by storing a device identifier or an information identifier corresponding to each version.

The manager 36 includes a communication management table update information receiver (not shown in the figure) receiving communication management table update information, which is information to be updated within the communication management table, and a communication management table updater of the manager side (not shown in the figure) updating the communication management table of the manager side and the communication management table version of the manager side correspondingly.

In case shown in Fig. 7, the communication management table update information receiver updates the communication management table version 90 on receiving the communication management table update information from any of the encryptors. In case shown in Fig. 8, the communication management table update information receiver updates either of or both of the Internet communication information A50 and the subnet configuration information A70, and further updates the information version 91 for the encryptor A. In case shown in Fig. 9, on receiving the communication management table update information from the encryptor All, the communication management table update information receiver checks whether it is required to update either of or both of the communication management table update information related to the Internet communication information A50 and the communication management table update information related to the subnet configuration information A70 and updates the communication management table update information. Further, the communication management table update information receiver updates either of or both of the Internet communication information version 93 for the encryptor A and the subnet configuration information version 94 for the encryptor A corresponding to the communication management table update information.

In case of subdividing the communication management table version as shown in Figs. 8 and 9, it is also effective that the communication management table version checker 2006 compares the communication management table version for each subdivided version, and only part of the mismatched version of the communication management table can be transferred by communication management table transfer (S104). In such a case, information indicating the transferred part is added to the communication management table download instruction (S302). The communication management table receiver 1009 updates only the indicated part of the communication management table memory 1004 of the encryptor side and also updates only the indicated part of the communication management table version memory 1005 of the encryptor side.

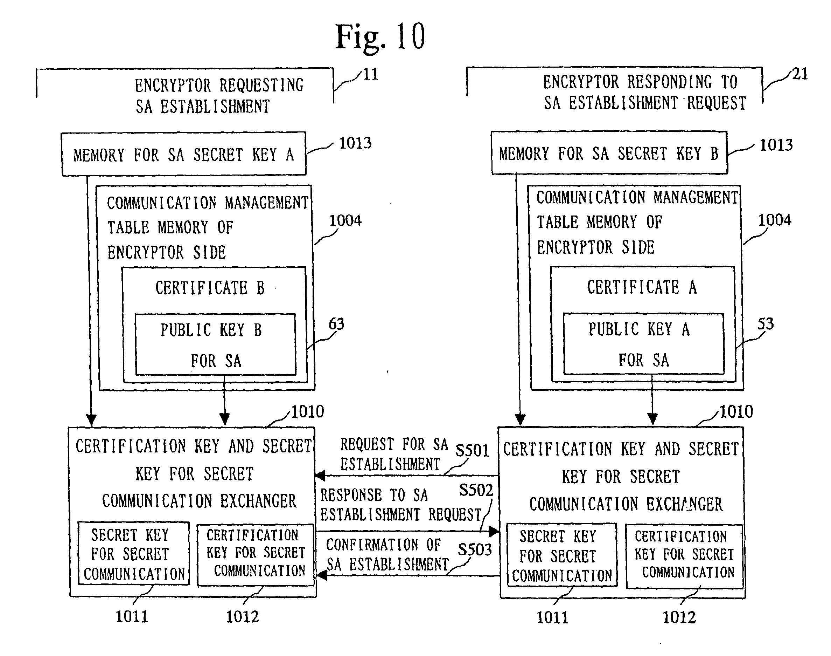

Next, an operation of establishing SA using the public key for SA included in the communication management table will be explained. Fig. 10 shows data flow on establishing SA. In this example, the encryptor A11 requests to establish SA, and the encryptor B21 responds to the request for establishing SA. Each encryptor has a secret key memory 1013 for SA storing a secret key for SA of its own encryptor and a certification key and secret key for secret communication exchanger 1010 for sharing a secret key 1011 for secret communication and a certification key 1012 for secret communication. The certification key and secret key for secret communication exchanger 1010 is configured so as to input the secret key for SA of its own encryptor and the public key for SA of the partner's encryptor.

The certification key and secret key for secret communication exchanger 1010 of the encryptor A11 generates a random number Xa, signatures, encrypts, and sends to the encryptor B21 (S501). The certification key and secret key for secret communication exchanger 1010 of the encryptor B21 generates a random number Xb. The certification key and secret key for secret communication exchanger 1010 of the encryptor B21 generates the secret key 1011 for secret communication and the certification key 1012 for secret communication by combining the random number Xb with the random number Xa. Further, the certification key and secret key for secret communication exchanger 1010 of the encryptor B21 signatures and encrypts hashed values of Xb and Xa, and sends them to the encryptor A11 (S502). The certification key and secret key for secret communication exchanger 1010 of the encryptor A11 generates the secret key 1011 for secret communication and the certification key 1012 for secret communication by combining the random numbers Xa and Xb, and checks the received hashed values. Further, the certification key and secret key for secret communication exchanger 1010 of the encryptor A11 sends the hashed value of the random number Xb to the encryptor B21 (S503). The certification key and secret key for secret communication exchanger 1010 of the encryptor B21 checks the received hashed value. Through the above procedure, SA is established. Consequently, both partners obtain the secret key 1011 for secret communication and the certification key 1012 for secret communication shared with each other.

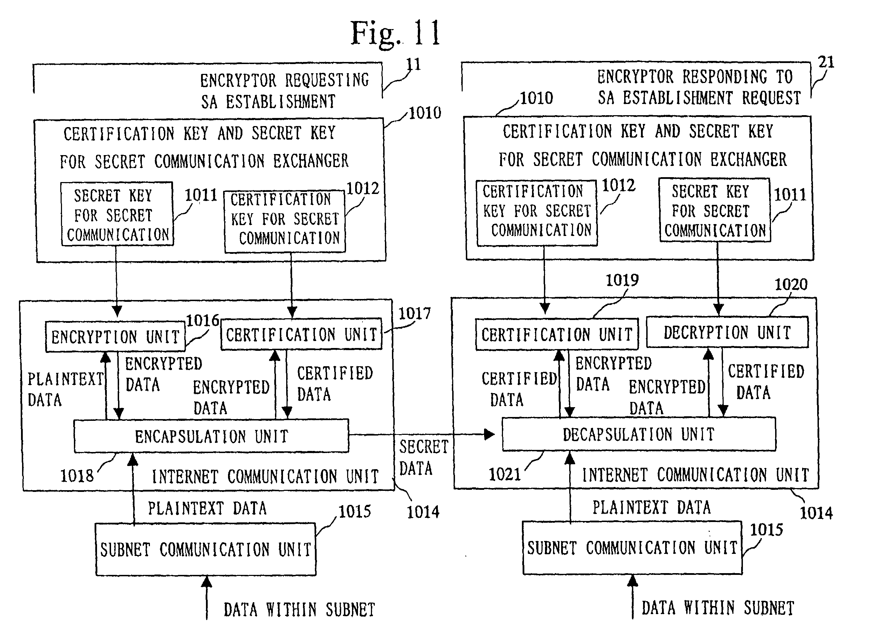

In the following, an operation of the secret communication performed after establishing SA will be explained. Fig. 11 shows data flow of the secret communication. In this example, the encryptor A11 sends data, and the encryptor B21 receives the data. The illustrated communication is only one of examples, since the communication can be bidirectional between the encryptors which have already established SA.

Each encryptor includes an Internet communication unit 1014 and a subnet communication unit 1015. The Internet communication unit 1014 controls the communication through the Internet 1, and the subnet communication unit 1015 controls the communication through the subnet.

In the Internet communication unit 1014 at the sender side, an encryption unit 1016, a certification unit 1017, and an encapsulation unit 1018 operate. In the Internet communication unit 1014 at the receiver side, a certification unit 1019, a decryption unit 1020, and a decapsulation unit 1021 operate. Within these operations, the secret key 1011 for secret communication is used for encryption algorithm, and the certification key 1012 for secret communication is used for authentication algorithm.

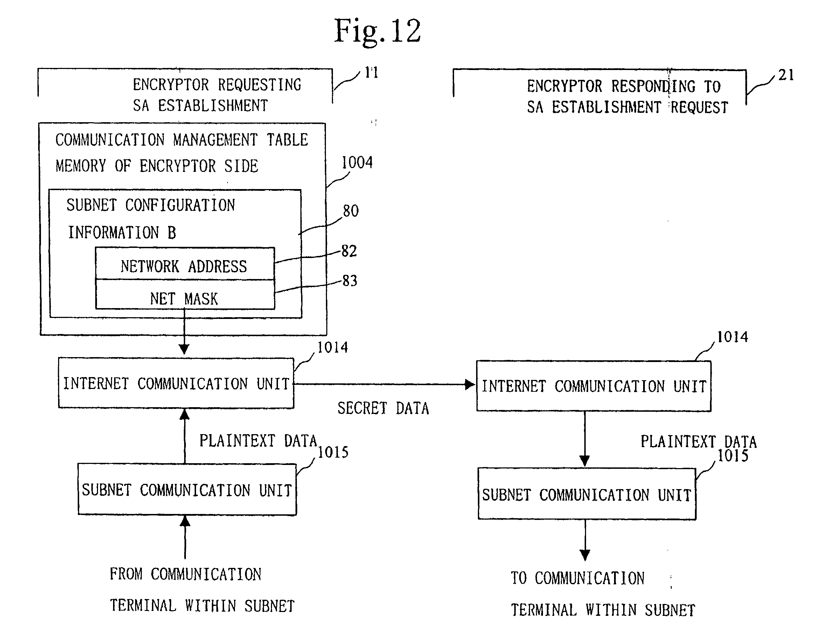

Further, the subnet configuration information included in the communication management table is used for communication to the subnet connected to another encryptor. As shown in Fig. 12, the subnet configuration information is used within the Internet communication unit 1014.

### Industrial Applicability

According to the present invention, the communication management table version is managed between the manager and the encryptor. When the communication management tables are judged as identical between the manager and the encryptor, the transfer of the communication management table is omitted. Therefore, the number of transferring the communication management table is reduced, which enormously improves performance and security of data communication.

## Claims

1. A communication management table transfer system comprising:
plural encryptors 11 connected to each other through Internet; and
a manager 36 which is adapted to manage the communication management table used for communication among the plural encryptors,
wherein each of the plural encryptors includes:
a communication management table memory 1004 of an encryptor side for storing a communication management table of the encryptor side which is the communication management table to be stored in the each of the plural encryptors;
a communication management table version memory 1005 of the encryptor side for storing a communication management table version of the encryptor side which is a version of the communication management table of the encryptor side; and
a communication management table version sender for sending the communication management table version of the encryptor side to the manager,
wherein the manager includes:
a communication management table memory 2004 of a manger side for storing a communication management table of the manager side which is the communication management table to be stored in the manager;
a communication management table version memory 2005 of the manager side for storing a communication management table version of the manager side which is a version of the communication management table of the manager side;
a communication management table version receiver for receiving the communication management table version of the encryptor side from the encryptor;
a communication management table version checker 2006 for checking and finding mismatch of the communication management table version of the encryptor side received and the communication management table version of the manager side; and
a communication management table sender 2008 for sending the communication management table of the manager side when the mismatch is found by the communication management table version checker,
wherein the encryptor further includes a communication management table receiver 1009 for receiving the communication management table of the manager side from the manager, and
wherein the communication management table memory of the encryptor side is adapted to store the communication management table of the manager side received by the communication management table receiver as the communication management table of the encryptor side.

2. The communication management table transfer system of claim 1,
wherein the communication management table sender is further adapted to send the communication management table version of the manager side when the mismatch is found by the communication management table version checker,
wherein the communication management table receiver is further adapted to receive the communication management table version of the manager side from the manager, and
wherein the communication management table version memory of the encryptor side is adapted to store the communication management table version of the manager side received by the communication management table receiver as the communication management table version of the encryptor side.

3. A manager 36 managing a communication management table used for communication among plural encryptors connected to each other through Internet comprising:
a communication management table memory 2004 of a manger side for storing a communication management table of the manager side which is the communication management table to be stored in the manager;
a communication management table version memory 2005 of the manager side for storing a communication management table version of the manager side which is a version of the communication management table of the manager;
a communication management table version receiver for receiving a communication management table version of an encryptor side which is a version of the communication management table of the encryptor side to be store in the encryptor from each of the plural encryptors;
a communication management table version checker 2006 for checking and finding mismatch of the communication management table version of the encryptor side received and the communication management table version of the manager side; and
a communication management table sender 2008 for sending the communication management table of the manager side when the mismatch is found by the communication management table version checker.

4. The manager of claim 3, wherein the communication management table sender is further adapted to send the communication management table version of the manager side when the mismatch is found by the communication management table version checker.

5. The manager of claim 3 further comprising a communication management table updater of the manager side for updating the communication management table of the manager side and the communication management table version of the manager side correspondingly.

6. The manager of claim 5 further comprising a communication management table update information receiver for receiving communication management table update information which is information to be updated within the communication management table of the manager side.

7. An encryptor 11 connected to another encryptor through Internet and of which a communication management table used for communication is managed by a manager, the encryptor comprising:
a communication management table memory 1004 of an encryptor side for storing a communication management table of the encryptor side which is the communication management table to be stored in the encryptor;
a communication management table version memory 1005 of the encryptor side for storing a communication management table version of the encryptor side which is a version of the communication management table of the encryptor side;
a communication management table version sender for sending the communication management table version of the encryptor side to the manager; and
a communication management table receiver for receiving a communication management table of a manager side which is the communication management table to be stored in the manager from the manager, and
wherein the communication management table memory of the encryptor side is adapted to store the communication management table of the manager side received by the communication management table receiver as the communication management table of the encryptor side.

8. The encryptor of claim 7, wherein:
the communication management table receiver is further adapted to receive a communication management table version of the manager side which is a version of the communication management table of the manager side from the manager; and
the communication management table version memory of the encryptor side is adapted to store the communication management table version of the manager side received by the communication management table receiver as the communication management table version of the encryptor side.

9. The encryptor of claim 7, wherein the communication management table includes a public key, and
the encryptor further comprising:
a secret key for secret communication exchanger for sharing a secret key for secret communication used for secret communication with the other encryptor through the Internet, with the other encryptor by using the public key included in the communication management table of the encryptor side.

10. The encryptor of claim 7, wherein the communication management table includes a public key, and
the encryptor further comprising:
an certification key for secret communication exchanger for sharing an certification key for secret communication used for secret communication with the other encryptor through the Internet, with the other encryptor by using the public key included in the communication management table of the encryptor side.

11. The encryptor of claim 7, wherein:
the other encryptor is connected to a subnet; and
the communication management table includes subnet configuration information which is information related to a configuration of the subnet, and
the encryptor further comprising:
an Internet communicating unit for communicating with the other encryptor through the Internet based on the subnet configuration information included in the communication management table of the encryptor side.

12. A method for transferring a communication management table used for a communication management table transfer system including:
plural encryptors connected to each other through Internet, each of which has a communication management table memory of an encryptor side for storing a communication management table of the encryptor side and a communication management table version memory for storing a communication management table version of the encryptor side; and
a manager managing the communication management table used for communication among the plural encryptors, which has a communication management table memory of a manager side for storing a communication management table of the manager side and a communication management table version memory for storing a communication management table version of the manager side,
the method comprising:
sending the communication management table version of the encryptor side to the manager by the encryptor;
receiving the communication management table version of the encryptor side from the encryptor by the manager;
checking and finding mismatch of the communication management table version of the encryptor side received and the communication management table version of the manager side by the manager;
sending the communication management table of the manager side by the manager when the mismatch is found by the checking and finding;
receiving the communication management table of the manager side from the manager by the encryptor; and
storing the communication management table of the manager side received as the communication management table of the encryptor side by the encryptor.

## Patentansprüche

1. Kommunikationsverwaltungstabellen-Übertragungssystem, welches aufweist:
mehrere Verschlüssler (11), die über das Internet miteinander verbunden sind; und
eine Verwaltungsvorrichtung (36), die ausgebildet ist zum Verwalten der für die Kommunikation zwischen den mehreren Verschlüsslern verwendeten Kommunikationsverwaltungstabelle,
worin jeder der mehreren Verschlüssler enthält:
einen Kommunikationsverwaltungstabellen-Speicher (1004) einer Verschlüsslerseite zum Speichern einer Kommunikationsverwaltungstabelle der Verschlüsslerseite, die die in jedem der mehreren Verschlüssler zu speichernde Kommunikationsverwaltungstabelle ist;
einen Kommunikationsverwaltungstabellenversions-Speicher (1005) der Verschlüsslerseite zum Speichern einer Kommunikationsverwaltungstabellenversion der Verschlüsslerseite, die eine Version der Kommunikationsverwaltungstabelle der Verschlüsslerseite ist; und
einen Kommunikationsverwaltungstabellenversions-Sender zum Senden der Kommunikationsverwaltungstabellenversion der Verschlüsslerseite zu der Verwaltungsvorrichtung,
worin die Verwaltungsvorrichtung enthält:
einen Kommunikationsverwaltungstabellen-Speicher (2004) einer Verwaltungsvorrichtungsseite zum Speichern einer Kommunikationsverwaltungstabelle der Verwaltungsvorrichtungsseite, die die in der Verwaltungsvorrichtung zu speichernde Kommunikationsverwaltungstabelle ist;
einen Kommunikationsverwaltungstabellenversions-Speicher (2005) der Verwaltungsvorrichtungsseite zum Speichern einer Kommunikationsverwaltungstabellenversion der Verwaltungsvorrichtungsseite, die eine Version der Kommunikationsverwaltungstabelle der Verwaltungsvorrichtungsseite ist; einen Kommunikationsverwaltungstabellenversions-Empfänger zum Empfangen der Kommunikationsverwaltungstabellenversion der Verschlüsslerseite von dem Verschlüssler;
eine Kommunikationsverwaltungstabellenversions-Prüfvorrichtung (2006) zum Prüfen und Finden einer Fehlanpassung der empfangenen Kommunikationsverwaltungstabellenversion der Verschlüsslerseite und der Kommunikationsverwaltungstabellenversion der Verwaltungsvorrichtungsseite; und
einen Kommunikationsverwaltungstabellen-Sender (2008) zum Senden der Kommunikationsverwaltungstabelle der Verwaltungsvorrichtungsseite, wenn die Fehlanpassung durch die Kommunikationsverwaltungstabellenversions-Prüfvorrichtung gefunden ist,
worin der Verschlüssler weiterhin einen Kommunikationsverwaltungstabellen-Empfänger (1009) für den Empfang der Kommunikationsverwaltungstabelle der Verwaltungsvorrichtungsseite von der Verwaltungsvorrichtung enthält, und
worin der Kommunikationsverwaltungstabellen-Speicher der Verschlüsslerseite ausgebildet ist zum Speichern der von dem Kommunikationsverwaltungstabellen-Empfänger empfangenen Kommunikationsverwaltungstabelle der Verwaltungsvorrichtungsseite als der Kommunikationsverwaltungstabelle der Verschlüsslerseite.

2. Kommunikationsverwaltungstabellen-Übertragungssystem nach Anspruch 1, bei dem der Kommunikationsverwaltungstabellen-Sender weiterhin ausgebildet ist zum Senden der Kommunikationsverwaltungstabellenversion der Verwaltungsvorrichtungsseite, wenn die Fehlanpassung durch die Kommunikationsverwaltungstabellenversions-Prüfvorrichtung gefunden ist,
bei dem der Kommunikationsverwaltungstabellen-Empfänger weiterhin ausgebildet ist zum Empfangen der Kommunikationsverwaltungstabellenversion der Verwaltungsvorrichtungsseite von der Verwaltungsvorrichtung, und
bei dem der Kommunikationsverwaltungstabellenversions-Speicher der Verschlüsslerseite ausgebildet ist zum Speichern der von dem Kommunikationsverwaltungstabellen-Empfänger empfangenen Kommunikationsverwaltungstabellenversion der Verwaltungsvorrichtungsseite als der Kommunikationsverwaltungstabellenversion der Verschlüsslerseite.

3. Verwaltungsvorrichtung (36) zum Verwalten einer Kommunikationsverwaltungstabelle, die für die Kommunikation zwischen mehreren durch das Internet miteinander verbundenen Verschlüsslern verwendet wird, welche aufweist:
einen Kommunikationsverwaltungstabellen-Speicher (2004) einer Verwaltungsvorrichtungsseite zum Speichern einer Kommunikationsverwaltungstabelle der Verwaltungsvorrichtungsseite, die die in der Verwaltungsvorrichtung zu speichernde Kommunikationsverwaltungstabelle ist;
einen Kommunikationsverwaltungstabellenversions-Speicher (2005) der Verwaltungsvorrichtungsvorrichtungsseite zum Speichern einer Kommunikationsverwaltungstabellenversion der Verwaltungsvorrichtungsseite, die eine Version der Kommunikationsverwaltungstabelle der Verwaltungsvorrichtung ist;
einen Kommunikationsverwaltungstabellenversions-Empfänger zum Empfangen einer Kommunikationsverwaltungstabellenversion einer Verschlüsslerseite, die eine in dem Verschlüssler zu speichernde Version Kommunikationsverwaltungstabelle der Verschlüsslerseite ist, von jedem der mehreren Verschlüssler;
eine Kommunikationsverwaltungstabellenversions-Prüfvorrichtung (2006) zum Prüfen und Finden einer Fehlanpassung der empfangenen Kommunikationsverwaltungstabellenversion der Verschlüsslerseite und der Kommunikationsverwaltungstabellenversion der Verwaltungsvorrichtungsseite; und
einen Kommunikationsverwaltungstabellen-Sender (2008) zum Senden der Kommunikationsverwaltungstabelle der Verwaltungsvorrichtungsseite, wenn die Fehlanpassung durch die Kommunikationsverwaltungstabellenversions-Prüfvorrichtung gefunden ist.

4. Verwaltungsvorrichtung nach Anspruch 3, bei der der Kommunikationsverwaltungstabellen-Sender weiterhin ausgebildet zum Senden der Kommunikationsverwaltungstabellenversion der Verwaltungsvorrichtungsseite, wenn die Fehlanpassung durch die Kommunikationsverwaltungstabellenversions-Prüfvorrichtung gefunden ist.

5. Verwaltungsvorrichtung nach Anspruch 3, weiterhin aufweisend eine Kommunikationsverwaltungstabellen-Aktualisierungsvorrichtung der Verwaltungsvorrichtungsseite zum Aktualisieren der Kommunikationsverwaltungstabelle der Verwaltungsvorrichtungsseite und entsprechend der Kommunikationsverwaltungstabellenversion der Verwaltungsvorrichtungsseite.

6. Verwaltungsvorrichtung nach Anspruch 5, aufweisend einen Kommunikationsverwaltungstabellen-Aktualisierungsinformationsempfänger zum Empfangen von Kommunikationsverwaltungstabellen-Aktualisierungsinformationen, die die in der Kommunikationsverwaltungstabelle der Verwaltungsvorrichtungsseite zu aktualisierenden Informationen sind.

7. Verschlüssler (11), der mit einem anderen Verschlüssler durch das Internet verbunden ist und von dem eine für die Kommunikation verwendete Kommunikationsverwaltungstabelle durch eine Verwaltungsvorrichtung verwaltet wird, welcher Verschlüssler aufweist:
einen Kommunikationsverwaltungstabellen-Speicher (1004) einer Verschlüsslerseite zum Speichern einer Kommunikationsverwaltungstabelle der Verschlüsslerseite, die eine in dem Verschlüssler zu speichernde Kommunikationsverwaltungstabelle ist;
einen Kommunikationsverwaltungstabellenversions-Speicher (1005) der Verschlüsslerseite zum Speichern einer Kommunikationsverwaltungstabellenversion der Verschlüsslerseite, die eine Version der Kommunikationsverwaltungstabelle der Verschlüsslerseite ist;
einen Kommunikationsverwaltungstabellenversions-Sender zum Senden der Kommunikationsverwaltungstabellenversion der Verschlüsslerseite zu der Verwaltungsvorrichtung; und
einen Kommunikationsverwaltungstabellen-Empfänger zum Empfangen einer Kommunikationsverwaltungstabelle einer Verwaltungsvorrichtungsseite, die die in der Verwaltungsvorrichtung zu speichernde Kommunikationsverwaltungstabelle ist, von der Verwaltungsvorrichtung, und
worin der Kommunikationsverwaltungstabellen-Speicher der Verschlüsslerseite ausgebildet ist zum Speichern der von dem Kommunikationsverwaltungstabellen-Empfänger empfangenen Kommunikationsverwaltungstabelle der Verwaltungsvorrichtungsseite als der Kommunikationsverwaltungstabelle der Verschlüsslerseite.

8. Verschlüssler nach Anspruch 7, bei dem:
der Kommunikationsverwaltungstabellen-Empfänger ist weiterhin ausgebildet zum Empfangen einer Kommunikationsverwaltungstabellenversion der Verwaltungsvorrichtungsseite, die eine Version der Kommunikationsverwaltungstabelle der Verwaltungsvorrichtungsseite ist, von der Verwaltungsvorrichtung; und
der Kommunikationsverwaltungstabellenversions-Speicher der Verschlüsslerseite ist ausgebildet zum Speichern der von dem Kommunikationsverwaltungstabellen-Empfänger empfangenen Kommunikationsverwaltungstabellenversion der Verwaltungsvorrichtungsseite als der Kommunikationsverwaltungstabellenversion der Verschlüsslerseite.

9. Verschlüssler nach Anspruch 7, bei dem die Kommunikationsverwaltungstabelle einen öffentlichen Schlüssel enthält, und
der Verschlüssler weiterhin aufweist:
einen Geheimschlüssel für geheimen Kommunikationsaustausch zum Teilen eines Geheimschlüssels für geheime Kommunikation, der verwendet wird für geheime Kommunikation mit dem anderen Verschlüssler über das Internet, mit dem anderen Verschlüssler durch Verwenden des in der Kommunikationsverwaltungstabelle der Verschlüsslerseite enthaltenen öffentlichen Schlüssels.

10. Verschlüssler nach Anspruch 7, bei dem die Kommunikationsverwaltungstabelle einen öffentlichen Schlüssel enthält, und
der Verschlüssler weiterhin aufweist:
einen Zertifikatsschlüssel für geheimen Kommunikationsaustausch zum Teilen eines Zertifikatsschlüssels für geheime Kommunikation, der für geheime Kommunikation mit dem anderen Verschlüssler über das Internet verwendet wird, mit dem anderen Verschlüssler durch Verwenden des in der Kommunikationsverwaltungstabelle der Verschlüsslerseite enthaltenen öffentlichen Schlüssels.

11. Verschlüssler nach Anspruch 7, bei dem:
der andere Verschlüssler mit einem Subnetz verbunden ist; und
die Kommunikationsverwaltungstabelle Subnetz-Konfigurationsinformationen enthält, die auf eine Konfiguration des Subnetzes bezogene Informationen sind, und
der Verschlüssler weiterhin aufweist:
eine Internet-Kommunikationseinheit zum Kommunizieren mit dem anderen Verschlüssler über das Internet auf der Grundlage der in der Kommunikationsverwaltungstabelle der Verschlüsslerseite enthaltenen Subnetz-Konfigurationsinformationen.

12. Verfahren zum Übertragen einer Kommunikationsverwaltungstabelle, die für ein Kommunikationsverwaltungstabellen-Übertragungssystem verwendet wird, enthaltend:
mehrere über das Internet miteinander verbundene Verschlüssler, von denen jeder einen Kommunikationsverwaltungstabellen-Speicher einer Verschlüsslerseite für die Speicher einer Kommunikationsverwaltungstabelle der Verschlüsslerseite und einen Kommunikationsverwaltungstabellenversions-Speicher zum Speichern einer Kommunikationsverwaltungstabellenversion der Verschlüsslerseite hat; und
eine Verwaltungsvorrichtung, die die für die Kommunikation zwischen den mehreren Verschlüsslern verwendete Kommunikationsverwaltungstabelle verwaltet und die einen Kommunikationsverwaltungstabellen-Speicher einer Verwaltungsvorrichtungsseite zum Speichern einer Kommunikationsverwaltungstabelle der Verwaltungsvorrichtungsseite sowie einen Kommunikationsverwaltungstabellenversions-Speichern zum Speichern einer Kommunikationsverwaltungstabellenversion der Verwaltungsvorrichtungsseite hat,
welches Verfahren aufweist:
Senden der Kommunikationsverwaltungstabellenversion der Verschlüsslerseite durch den Verschlüssler zu der Verwaltungsvorrichtung; Empfangen der Kommunikationsveraltungstabellenversion der Verschlüsslerseite von dem Verschlüssler durch die Verwaltungsvorrichtung; Prüfen und Finden einer Fehlanpassung der empfangenen Kommunikationsverwaltungstabellenversion der Verschlüsslerseite und der Kommunikationsverwaltungstabellenversion der Verwaltungsvorrichtungsseite durch die Verwaltungsvorrichtung;
Senden der Kommunikationsverwaltungstabelle der Verwaltungsvorrichtungsseite durch die Verwaltungsvorrichtung, wenn die Fehlanpassung durch das Prüfen und Finden gefunden wurde;
Empfangen der Kommunikationsverwaltungstabelle der Verwaltungsvorrichtungsseite von der Verwaltungsvorrichtung durch den Verschlüssler; und
Speichern der empfangenen Kommunikationsverwaltungstabelle der Verwaltungsvorrichtungsseite als die Kommunikationsverwaltungstabelle der Verschlüsslerseite durch den Verschlüssler.

## Revendications

1. Système de transfert de table de gestion de communications comprenant :
de multiples unités de chiffrement 11 raccordées l'une à l'autre via Internet; et
un gestionnaire 36 qui est à même de gérer la table de gestion des communications utilisée pour une communication entre les multiples unités de chiffrement,
dans lequel chacune des multiples unités de chiffrement comprend :
une mémoire 1004 de table de gestion des communications d'un côté de l'unité de chiffrement pour stocker une table de gestion des communications du côté de l'unité de chiffrement, qui est la table de gestion des communications à stoker dans chacune des multiples unités de chiffrement;
une mémoire 1005 de version de table de gestion des communications du côté de l'unité de chiffrement pour stocker une version de la table de gestion des communications du côté de l'unité de chiffrement, qui est une version de la table de gestion des communications du côté de l'unité de chiffrement; et
un émetteur de version de la table de gestion des communications pour envoyer la version de la table de gestion des communications du côté de l'unité de chiffrement au gestionnaire;
dans lequel le gestionnaire comprend :
une mémoire 2004 de table de gestion des communications d'un côté du gestionnaire pour stocker uns table de gestion des communications du côté du gestionnaire, qui est la table de gestion des communications à stocker dans le gestionnaire;
une mémoire 2005 de version de la table de gestion des communications du côté du gestionnaire pour stocker une version de la table de gestion des communications du côté du gestionnaire, qui est une version de la table de gestion des communications du côté du gestionnaire;
un récepteur de version de la table de gestion des communications pour recevoir la version de la table de gestion des communications du côté de l'unité de chiffrement en provenance de l'unité de chiffrement;
un contrôleur 2006 de version de la table de gestion des communications pour contrôler et trouver une discordance entre la version reçue de la table de gestion des communications du côté de l'unité de chiffrement et la version de la table de gestion des communications du côté du gestionnaire; et
un émetteur 2008 de table de gestion des communications pour envoyer la table de gestion des communications du côté du gestionnaire lorsque la discordance est trouvée par le contrôleur de version de la table de gestion des communications;
dans lequel l'unité de chiffrement comprend en outre un récepteur 1009 de table de gestion des communications pour recevoir la table de gestion des communications du côté du gestionnaire en provenance du gestionnaire; et
dans lequel la mémoire de table de gestion des communications du côté de l'unité de chiffrement est à même de stocker la table de gestion des communications du côté du gestionnaire reçue par le récepteur de table de gestion des communications comme table de gestion des communications du côté de l'unité de chiffrement.

2. Système de transfert de table de gestion de communications selon la revendication 1,
dans lequel l'émetteur de table de gestion des communications est en outre à même d'envoyer la version de la table de gestion des communications du côté du gestionnaire lorsque la discordance est trouvée par le contrôleur de version de la table de gestion des communications;
dans lequel le récepteur de table de gestion des communications est en outre à même de recevoir la version de la table de gestion des communications du côté du gestionnaire en provenance du gestionnaire; et
dans lequel la mémoire de version de la table de gestion des communications du côté de l'unité de chiffrement est à même de stocker la version de la table de gestion des communications du côté du gestionnaire reçue par le récepteur de table de gestion comme version de la table de gestion des communications du côté de l'unité de chiffrement.

3. Gestionnaire 36 gérant une table de gestion de communications utilisée pour une communication entre plusieurs unités de chiffrement raccordées l'une à l'autre via Internet, comprenant :
une mémoire 2004 de table de gestion des communications d'un côté du gestionnaire pour stocker une table de gestion des communications du côté du gestionnaire, qui est la table de gestion des communications à stocker dans le gestionnaire;
une mémoire 2005 de version de la table de gestion des communications du côté du gestionnaire pour stocker une version de la table de gestion des communications du côté du gestionnaire, qui est une version de la table de gestion des communications du côté du gestionnaire;
un récepteur de version de la table de gestion des communications pour recevoir une version de la table de gestion des communications d'un côté de l'unité de chiffrement, qui est une version de la table de gestion des communications du côté de l'unité de chiffrement à stocker dans l'unité de chiffrement en provenance de chacune des multiples unités de chiffrement;
un contrôleur 2006 de version de la table de gestion des communications pour contrôler et trouver une discordance entre la version reçue de la table de gestion des communications du côté de l'unité de chiffrement et la version de la table de gestion des communications du côté du gestionnaire; et
un émetteur 2008 de table de gestion des communications pour envoyer la table de gestion des communications du côté du gestionnaire lorsque la discordance est trouvée par le contrôleur de version de la table de gestion des communications.

4. Gestionnaire selon la revendication 3, dans lequel l'émetteur de table de gestion des communications est en outre à même d'envoyer la version de la table de gestion des communications du côté du gestionnaire lorsque la discordance est trouvée par le contrôleur de version de la table de gestion des communications.

5. Gestionnaire selon la revendication 3, comprenant en outre un programme de mise à jour de la table de gestion des communications du côté du gestionnaire pour mettre à jour la table de gestion des communications du côté du gestionnaire et, de manière correspondante, la version de la table de gestion des communications du côté du gestionnaire.

6. Gestionnaire selon la revendication 5, comprenant en outre un récepteur d'informations de mise à jour de la table de gestion des communications pour recevoir des informations de mise à jour de la table de gestion des communications, qui sont des informations à mettre à jour dans la table de gestion des communications du côté du gestionnaire.

7. Unité de chiffrement 11 raccordée à une autre unité de chiffrement via Internet et dont une table de gestion des communications utilisée pour la communication est gérée par un gestionnaire, l'unité de chiffrement comprenant :
une mémoire 1004 de table de gestion des communications d'un côté de l'unité de chiffrement pour stocker une table de gestion des communications du côté de l'unité de chiffrement, qui est la table de gestion des communications à stoker dans l'unité de chiffrement;
une mémoire 1005 de version de la table de gestion des communications du côté de l'unité de chiffrement pour stocker une version de la table de gestion des communications du côté de l'unité de chiffrement, qui est une version de la table de gestion des communications du côté de l'unité de chiffrement;
un émetteur de version de la table de gestion des communications pour envoyer la version de la table de gestion des communications du côté de l'unité de chiffrement au gestionnaire; et
un récepteur de table de gestion des communications pour recevoir une table de gestion des communications d'un côté du gestionnaire, qui est la table de gestion des communications à stocker dans le gestionnaire en provenance du gestionnaire; et
dans laquelle la mémoire de table de gestion des communications du côté de l'unité de chiffrement est à même de stocker la table de gestion des communications du côté du gestionnaire reçue par le récepteur de table de gestion des communications comme table de gestion des communications du côté de l'unité de chiffrement.

8. Unité de chiffrement selon la revendication 7, dans laquelle :
le récepteur de table de gestion des communications est en outre à même de recevoir une version de la table de gestion des communications du côté du gestionnaire, qui est une version de la table de gestion des communications du côté du gestionnaire en provenance du gestionnaire; et
la mémoire de version de la table de gestion des communications du côté de l'unité de chiffrement est à même de stocker la version de la table de gestion des communications du côté du gestionnaire reçue par le récepteur de table de gestion des communications comme version de la table de gestion des communications du côté de l'unité de chiffrement.

9. Unité de chiffrement selon la revendication 7, dans laquelle la table de gestion des communications comprend une clé publique, et
l'unité de chiffrement comprend en outre :
une clé secrète pour un échangeur de communications secrètes afin de partager une clé secrète pour une communication secrète utilisée pour une communication secrète avec l'autre unité de chiffrement via Internet, avec l'autre unité de chiffrement en utilisant la clé publique comprise dans la table de gestion des communications du côté de l'unité de chiffrement.

10. Unité de chiffrement selon la revendication 7, dans laquelle la table de gestion des communications comprend une clé publique, et
l'unité de chiffrement comprend en outre :
une clé de certification pour un échangeur de communications secrètes afin de partager une clé de certification pour une communication secrète utilisée pour une communication secrète avec l'autre unité de chiffrement via Internet, avec l'autre unité de chiffrement en utilisant la clé publique comprise dans la table de gestion des communications du côté de l'unité de chiffrement.

11. Unité de chiffrement selon la revendication 7, dans laquelle :
l'autre unité de chiffrement est raccordée à un sous-réseau, et
la table de gestion des communications comprend des informations de configuration du sous-réseau, qui sont des informations en rapport avec la configuration du sous-réseau, et
l'unité de chiffrement comprend en outre :
une unité de communication via Internet pour communiquer avec l'autre unité de chiffrement via Internet en se basant sur les informations de configuration du sous-réseau comprises dans la table de gestion des communications du côté de l'unité de chiffrement.

12. Procédé pour transférer une table de gestion de communications utilisée pour un système de transfert de table de gestion des communications comprenant :
de multiples unités de chiffrement raccordées l'une à l'autre via Internet, dont chacune a une mémoire de table de gestion des communications d'un côté de l'unité de chiffrement pour stocker une table de gestion des communications du côté de l'unité de chiffrement et une mémoire de version de la table de gestion des communications pour stocker une version de la table de gestion des communications du côté de l'unité de chiffrement; et
un gestionnaire gérant la table de gestion des communications utilisée pour une communication entre les multiples unités de chiffrement, qui a une mémoire de table de gestion des communications d'un côté du gestionnaire pour stocker une table de gestion des communications du côté du gestionnaire et une mémoire de version de la table de gestion des communications pour stocker une version de la table de gestion des communications du côté du gestionnaire,
le procédé comprenant :
l'envoi de la version de la table de gestion des communications du côté de l'unité de chiffrement au gestionnaire par l'unité de chiffrement;
la réception de la version de la table de gestion des communications du côté de l'unité de chiffrement en provenance de l'unité de chiffrement par le gestionnaire;
le contrôle et la détection d'une discordance entre la version reçue de la table de gestion des communications du côté de l'unité de chiffrement et la version de la table de gestion des communications du côté du gestionnaire, par le gestionnaire;
l'envoi de la table de gestion des communications du côté du gestionnaire par le gestionnaire lorsque la discordance est trouvée lors du contrôle et de la détection;
la réception de la table de gestion des communications du côté du gestionnaire en provenance du gestionnaire par l'unité de chiffrement; et
le stockage de la table reçue de gestion des communications du côté du gestionnaire comme table de gestion des communications du côté de l'unité de chiffrement par l'unité de chiffrement.
